# EUROPÄISCHE PATENTSCHRIFT

(11) **EP 2 319 808 B1**
(45) Veröffentlichungstag und Bekanntmachung des Hinweises auf die Patenterteilung: **08.04.2015**
(21) Anmeldenummer: 10401165.5
(22) Anmeldetag: 16.09.2010
(51) Int. Cl.: C02F 3/04, B01D 24/46, C02F 3/12, C02F 3/10

(54) **Verfahren zur Behandlung von Wasser**
Method for treatment of water
Procédé pour le traitement de l'eau

(30) Priorität: 08.10.2009 DE 102009044208
(43) Veröffentlichungstag der Anmeldung: 11.05.2011
(73) Patentinhaber: DAS Environmental Expert GmbH, 01219 Dresden (DE)
(72) Erfinder: Haldenwang, Lutz, 01445 Radebeul (DE); Frenzel, Andreas, 01217 Dresden (DE); IIgen, Kerstin, 01705 Freital (DE); Reichardt, Rene, 01257 Dresden (DE); Reichardt, Horst, 01219 Dresden (DE)
(74) Vertreter: Hofmann, Klaus

(56) Entgegenhaltungen:
- DE-A1-102004 009 559
- DE-A1-102005 051 711
- DE-C1- 4 403 716
- US-A- 5 910 249
- US-A1- 2006 108 282

## Beschreibung

Die Erfindung betrifft ein Verfahren zur Behandlung von Wasser, insbesondere von Oberflächenwasser, von Brauchwasser und von Abwasser aus Kommunen, der Industrie, der Landwirtschaft und Entsorgungsbetrieben. Mit ihm können neben dem Abbau der gelösten organischen Fracht (CSB- und BSB-Konzentration) und von Ammonium (NH₄ -Konzentration) auch feine partikuläre Stoffe, Mikroorganismen und höherwertige Salze aus dem Wasser entfernt werden. Unter anderen ist es möglich, Abwässer für die Wiederverwendung in der Produktion aufzubereiten sowie Grenzwerte zu erreichen, wie sie z.B. für Badewasser und für die Einleitung von Wasser in geschützte Oberflächengewässer gelten.

Die überwiegende Anzahl der organischen Verbindungen wird von natürlich vorkommenden aeroben Mikroorganismen unter Aufnahme von Sauerstoff vollständig in Kohlendioxid und Wasser sowie Zellsubstanz umgewandelt. Da dieser Prozess naturnah verläuft und mit verhältnismäßig wenig Aufwand durchgeführt werden kann, wurden in den letzten zwei Jahrzehnten verstärkt Technologien für die aerobe biologische Abwasserbehandlung entwickelt.

Besonders effektiv arbeiten Technologien, in welchen die biologisch aktive Schüttung nicht unter Wasser liegt und welche ein kleinkörniges Trägermaterial für den Aufwuchs der Mikroorganismen verwenden. Derartige Verfahren erreichen durch ihre sehr hohe Biomassekonzentration, welche mit nur geringem Aufwand ausreichend belüftet werden kann, eine hohe Raumabbauleistung bei niedrigen Betriebskosten.
In DE 10 2005 051 711 A1 ist ein Rieselstromverfahren mit einem nicht eingestauten Reaktionsraum beschrieben, welches sich dadurch auszeichnet, dass das Trägermaterial sehr klein ist, eine große Oberfläche für den biologischen Bewuchs bietet und auf einfache Weise kontinuierlich belüftet und regeneriert werden kann.

Das konventionelle Tropfkörperverfahren arbeitet ähnlich wie das Rieselstromverfahren mit einem Trägermaterial und einem nicht eingestauten Reaktionsraum. Da jedoch dabei ein sehr grobkörniges Trägermaterial verwendet wird, welches nicht regelmäßig regeneriert werden kann, ist der Ablauf ständig mit Biomasse belastet.

Im Gegensatz dazu wird im Verfahren nach DE 10 2005 051 711 A1 die kontinuierlich nachwachsende Biomasse nicht ständig abgerieben, sondern durch eine regelmäßige Luft-Wasser-Spülung des Trägermaterials abgerieben und separat aus dem System entfernt. Darüber hinaus wird ein großer Anteil der in den meisten Abwässern sowie in vielen Brauch- und Oberflächenwässern enthaltenen suspendierten Stoffe, z.B. Sand, Sägespäne sowie Reste von Papier, Blättern, Früchten u. a., aus dem Wasser abgetrennt. Damit erfolgt eine deutliche Reduzierung der feinen Feststoffe, welche in Form der absetzbaren Stoffe (ml/l) und der abfiltrierbaren Stoffe (mg/l) wichtige Kriterien für die Wasserqualität darstellen.

Jedoch werden auch mit diesem Verfahren die suspendierten Stoffe nur unvollständig reduziert und Teilchen im Mikrobereich, wie z.B. Stärke und Mikroorganismen, überhaupt nicht zurück gehalten. Für die Forderung nach einem feststofffreien oder keimfreien Wasser, wie sie für die Mehrfachnutzung von Wasser, die Aufbereitung von Badewasser und Abläufe bestimmter Kläranlagen besteht, reicht deshalb dieses Verfahren nicht aus.

Für die vollständige Rückhaltung feinster partikulärer Stoffe wurden in den letzten Jahren auf Grundlage unterschiedlicher Verfahrensprinzipien moderne Trennverfahren entwickelt. Sie gewährleisten mit der vollständigen Abtrennung feinster Feststoffteilchen sowie von Biomasseteilchen und einzelnen Mikroorganismen eine Qualität die den gesetzlichen Anforderungen an Badewasser, Gewässer - Güteklasse 1 und hochwertiges Brauchwasser vollständig genügt.

Bei Wässern mit einer Belastung aus gelösten organischen Verbindungen, wie sie bei den meisten Abwässern und Oberflächenwässern auftritt, sowie einer relativ hohe Konzentration feiner Feststoffe, wie sie bei vielen Abwässern und Oberflächenwässern auftritt, ist jedoch ein großer Aufwand für den Betrieb einer Feinfiltration erforderlich.

So sammeln sich, z.B. bei der Membranfiltration, die abgetrennten Stoffe auf der Oberfläche (Fouling) sowie teilweise im Porensystem der Membran. Die Höhe des Filtratflusses und die Standzeit bis zur Regenerierung oder dem Austausch der Membran sind direkt von dem zu filtrierenden Medium abhängig. Beim Auftreten klebriger oder schleimiger Teilchen kann der Filtratfluss bereits innerhalb weniger Stunden auf einen nicht akzeptablen Wert sinken.

Ein Beispiel für diesen Zusammenhang stellt das Biomembranverfahren (MBR) dar, bei dem das Abwasser nach dem biologischen Abbau in einem Belebungsbecken über Membranen filtriert wird. Durch die Abtrennung der im Abwasser verteilten Mikroorganismen und feinen Feststoffe kann auf diese Weise das üblicherweise notwendige Nachklärbecken eingespart werden.

Die suspendierte Biomasse im Belebungsbecken hat eine sehr hohe Konzentration, typischerweise ca. 8 g/l (Trockenmasse), und steht in direkten Kontakt mit der Oberfläche der Membran. Dadurch wird ein Anwachsen der Biomasse auf der Membranoberfläche begünstigt. Daraus und aus der großen Konzentration suspendierter Stoffe resultieren bei diesem Verfahren hohe Energiekosten für die eigentliche Filtration sowie ein hoher Aufwand für die häufige Reinigung und den regelmäßigen Ersatz der Membranen.

In DE 10 2004 009 559 A1 wird daher vorgeschlagen, im Zulauf eines Membranbioreaktors durch eine Filtereinrichtung mit einem Feinsieb feine suspendierte Stoffe zurückzuhalten. Die dort zurückgehalten Stoffe werden im Sieb angesammelt, so dass eine regelmäßige Reinigung bzw. Regenerierung erforderlich wird. Der Nachteil des direkten Kontaktes zwischen Biomasse in hoher Konzentration und der Membran wird jedoch durch das Sieb nicht beseitigt.

Der vorliegenden Erfindung liegt das Problem zugrunde, dass Wasser mit einem biologischen Verfahren in bestimmten Anwendungsfällen nicht ausreichend gereinigt werden kann und dass die Behandlung mit einem feinen Filter durch kurze Standzeiten sowie einen hohen Aufwand für die Regenerierung oder den Austausch des Filters gekennzeichnet ist.
Aufgabe der Erfindung ist es, ein Verfahren und einen Reaktor zu entwickeln, mit welchem eine sehr hohe Wasserqualität erreicht wird, während gleichzeitig lange Standzeiten und ein verhältnismäßig niedriger Aufwand für die Regenerierung oder den Austausch des feinporigen Filters gewährleistet werden.

Erfindungsgemäß wird die Aufgabe durch die Merkmale der Ansprüche 1, 14 und 20 gelöst. Ausgestaltende Merkmale sind in den Unteransprüchen 2 bis 13 und 15 bis 19 beschrieben.

Dazu wird ein großer Teil der die Verstopfung eines Feinfilters fördernden gelösten organischen Verbindungen und der suspendierten Stoffe des zu behandelnden Wassers zunächst mit einem biologisch arbeitenden Filter mikrobiologisch abgebaut und mechanisch abgetrennt. Anschließend werden die verbleibenden sehr feinen Feststoffe mit einem feinporigen Filter abfiltriert.

Erfindungsgemäß wird das zu behandelnde Wasser im oberen Teil eines nach oben offenen, nahezu drucklosen Reaktionsraums verteilt und durchrieselt eine nicht unter Wasser liegende Schüttung aus einem kleinkörnigen Aufwuchsträgermaterial für Mikroorganismen von oben nach unten. Gleichzeitig wird die Trägermaterialschüttung in Gegenrichtung zum abwärts rieselnden Wasser mit einem künstlich erzeugten Luftstrom von unten nach oben durchströmt. Dieser wird unterhalb oder im unteren Bereich der Schüttung zugeführt und tritt durch eine entsprechende Öffnung im oberen Teil des nahezu drucklosen Reaktionsraumes frei aus.

Dabei wird ein großer Teil der organischen Belastung des Wassers unter Aufnahme von Luftsauerstoff biologisch zu Kohlendioxid, Wasser und Biomasse abgebaut.

Das behandelte Abwasser wird im kontinuierlichen Betrieb mit der gleichen Geschwindigkeit mit der das unbehandelte Abwasser zugegeben wird aus dem System abgezogen.

Aufgrund des Anwachsens der Biomasse auf dem Trägermaterial enthält der Ablauf nur eine sehr geringe Biomassekonzentration. Typischerweise werden Werte von sehr viel kleiner als 0,1 g/l (Trockenmasse) erreicht, also 1 bis 2 Größenordnungen unter den Werten in Belebungsbecken. Die hohe Filtrationswirkung des bewachsenen Trägermaterials führt darüber hinaus dazu, dass der Anteil der suspendierten Stoffe des Rohwassers auf einen niedrigen Wert gesenkt wird.

Mindestens ein Teilstrom des durch die Trägermaterialschüttung gerieselten Wassers wird anschließend durch ein feinporiges Filter geleitet. Mit der vorgeschalteten, weitgehenden Reduzierung der gelösten organischen Fracht sowie der aus feinen Feststoffen und Biomasse bestehenden suspendierten Stoffe wird das Potenzial für die Verstopfung dieses Filters erheblich gesenkt.

Um den ungehinderten Kontakt zwischen trägerfixierten Mikroorganismen, Abwasser und Luftsauerstoff stabil aufrecht zu halten, findet in bestimmten Zeitabständen eine kurzzeitige Regenerierung statt. Bei dieser wird die Trägermaterialschüttung in Gegenrichtung zum rieselnden Wasserstrom mit einem Starkluftstrom derart durchströmt und vermengt, dass überschüssige Biomasse sowie ein Teil der aus dem Wasser abfiltrierten feinen Feststoffe dadurch abgerieben werden.

Nach einer Unterbrechung des Starkluftstroms und des Wasserstroms wird das anschließend aus der Trägermaterialschüttung abfließende Regenerat aus Wasser, abgeriebener Biomasse und feinen Feststoffen aufgefangen und aus dem System entfernt.

Die anfallende Menge Regenerat beträgt nur einen Bruchteil des Volumens des gesamten Reaktionsraumes. Der Regenerierbetrieb kann entweder durch eine Zeitschaltung oder in Abhängigkeit von dem unterhalb der Trägermaterialschüttung zunehmenden Druck des einströmenden Luftstroms automatisch ausgelöst werden.

Während dieses Regeneriervorgangs wird die Filtration durch das feinporige Filter unterbrochen, um zu verhindern, dass sich die abgeriebene Biomasse oder feine Feststoffe, die während der Regenerierung in hoher Konzentration in das Wasser gelangen, auf dem Filter absetzen. In der Regel ist es sinnvoll, gleichzeitig den Rohwasserzulauf abzuschalten.

Nach dem Abzug des Regenerats am Ende der Regenerierung kann der Auffangbehälter mit gereinigtem Wasser, welches während der vorhergehenden Wasserbehandlung dafür gesammelt wurde, wieder aufgefüllt werden. Dadurch wird verhindert, dass nach einer Regenerierung eine Nachfüllung von biologisch unbehandelten und unfiltrierten Rohwasser erfolgt und zu zeitweise schlechten Ablaufwerten und einer überdurchschnittlichen Belastung des Feinfilters führt.

In Abhängigkeit von der Wassermenge, welche pro Zeit gereinigt werden kann, d. h. in Abhängigkeit von den jeweiligen Parametern und Bedingungen, kann das nach der Passage des Trägermaterials aufgefangene Wasser teilweise im Kreislauf erneut von oben nach unten über die Trägermaterialschüttung gegeben werden. Mit einer ausreichend hohen Wasserströmung wird eine optimale Verteilung innerhalb der biologisch aktiven Trägermaterialschüttung erreicht. Die aus dem Wasserzulauf und der ggf. zusätzlichen Kreislaufführung resultierende Geschwindigkeit des von oben nach unten rieselnden Wassers sollte im Bereich zwischen 3 und 15 m³/m² x h liegen.

Sowohl für die kontinuierlich notwendige Belüftung als auch für die Zugabe der Starkluft während der Regenerierung ist es sehr vorteilhaft, dass die Zugabe nicht gegen den Druck der Wassersäule erfolgen muss. Deshalb reicht für die Belüftung bereits ein Luftstrom im Bereich zwischen 20 und 100 m³/m² x h und ein dementsprechend sehr niedriger Energieverbrauch vollständig aus, um die hohe Biomassekonzentration mit der notwendigen Sauerstoffmenge zu versorgen.

Für die Regenerierung reicht bereits ein Starkluftstrom im Bereich zwischen 150 - 1000 m³/m² x h und ein Druck zwischen 20 - 200 mbar pro Meter Höhe der Trägermaterialschüttung aus.

Die Regenerierung erfolgt in einem Regime von ein oder mehreren künstlich erzeugten kurzzeitigen Starkluftstößen, durch welche das Trägermaterialbett von unten nach oben durchströmt und dadurch in Bewegung versetzt und vermengt wird.

Das kleinkörnige Aufwuchsträgermaterial besitzt eine Dichte < 0,1 g/cm³ und eine Korngröße < 15 mm. Dabei ist es vorteilhaft, mit kugelförmigen Schaumpolystyren zu arbeiten. Wegen seines geringen Gewichtes von < 0,1 g/cm³ liegt das Trägermaterial in Form eines unverändert lockeren Bettes vor und bildet damit die Voraussetzung für den optimalen Stoffübergang zwischen Mikroorganismen in hoher Konzentration sowie Abwasser und Luft im Gegenstrom. Die genannten Eigenschaften sind gleichzeitig die Voraussetzung des nur geringen Aufwands für die oben beschriebene regelmäßige Regenerierung des Trägermaterials.

In einer vorteilhaften Durchführung des Verfahrens wird ein Membranmodul als feinporiger Filter verwendet. Ein solches Modul kann entweder als getauchtes Modul im Auffangbehälter oder als Cross-Flow-Filter in der Kreislaufleitung eingesetzt werden. Grundsätzlich sind aber auch andere Feinfilter, wie z.B. Sandfilter oder Papierfilter, für die Durchführung des Verfahrens einsetzbar. Auch bei diesen wirken sich die beschriebenen Vorteile des vorhergehenden mikrobiologischen Abbaus und der mechanischen Abtrennung von suspendierten Stoffen vorteilhaft aus.

Insbesondere bei Filtrationsanforderungen mit geringem Differenzdruck über den Filter ist der Einsatz eines eingetauchten Filters vorteilhaft, wenn der Druck der Wassersäule gegenüber dem Ablauf schon den erforderlichen Durchfluss erzeugt. Der Durchfluss durch das Filter kann aber mit Hilfe einer saugenden Pumpe im Ablauf nach dem Filter gesteigert werden.

Um die ablaufende Menge gereinigten Wassers mit dem Zulauf an Rohwasser auszugleichen, kann in Abhängigkeit vom Wasserspiegel im Auffangbehälter die Ablaufleitung zeitweise abgesperrt oder mit einem Drosselventil verengt werden oder bei Verwendung einer Pumpe kann die Pumpenleistung geregelt oder geschaltet werden.

Vorzugsweise wird als Filter ein Membranmodul eingesetzt. Zur Verbesserung der Standzeiten der Membran wird eine Strömung oder Turbulenz über der Membranoberfläche erzeugt. Dazu bietet das Verfahren mehrere günstige Möglichkeiten.

Es kann der künstlich erzeugte Luftstrom genutzt werden um Luftblasen über die Membranoberfläche aufsteigen zu lassen, die dabei Turbulenzen und eine sanfte Strömung erzeugen.

Es kann der Starkluftstrom während der Regenerierung genutzt werden, um große Mengen an Luft in das Wasser im Auffangbehälter einzublasen und dabei starke Turbulenzen oder eine Strömung durch gerichtete Injektion des Luftstroms zu erzeugen. Da während der Regenerierung der Durchfluss durch die Membran gestoppt werden kann, lassen sich schon festgesetzte Beläge in dieser Zeit leichter ablösen.

Weiterhin kann die Sogwirkung der Kreislaufleitung genutzt werden, um eine Strömung zu erzeugen. Dabei ist es vorteilhaft diese Strömung von oben nach unten im Modul zu führen, um das Absinken von Feststoffen zu beschleunigen.

Bei dem Einsatz eines Cross-Flow-Membranmoduls wird die schon vorhandene Strömung in der Kreislaufleitung zur Überströmung der Membran genutzt. Die Druckdifferenz über die Membran ergibt sich bei freiem Auslauf im Wesentlichen durch die Wassersäule über der Membran, also aus der Höhendifferenz zwischen dem Membranmodul und dem oberen Ende des Reaktors. Die Unterbrechung der Filtration kann über die Absperrung des Ablaufes erfolgen.

Das beschriebene Verfahren wird erfindungsgemäß mit Hilfe eines Reaktors umgesetzt.

Der Reaktor ist teilweise mit einer Schüttung von feinkörnigem Trägermaterialeiner Dichte von <0,1 g/cm³ gefüllt, auf der Biomasse anwachsen kann. Über der Schüttung ist eine Verteilungseinrichtung angeordnet, mit der das Rohwasser und das im Kreislauf geführte Wasser über die Schüttung verteilt wird. Unterhalb der Schüttung münden die Zuführungen für Luft und für den Starkluftstrom, der zur Regenerierung zugeschaltet wird. Am oberen Ende des Reaktors ist eine Öffnung, aus der der Luftstrom und auch die Starkluft bei der Regenerierung austreten können. Der Teil unterhalb der Schüttung dient als Auffangbehälter, in dem das verrieselte Wasser gesammelt wird. Aus diesem Behälter wird Wasser von einer Pumpe angesaugt über die Kreislaufleitung über die Verteilungseinrichtung erneut verrieselt. Der Zulauf des Rohwassers kann am oberen Ende des Reaktors oder auf der Saugseite der Pumpe in die Kreislaufleitung erfolgen oder in den Auffangbehälter im Ansaugbereich der Kreislaufleitung münden. Am unteren Ende des Reaktors ist ein Ablauf über den das Regenerat nach der Regenerierung der Trägermaterialschüttung abgezogen wird. In diesen Ablauf kann eine Pumpe zur Förderung des Wassers integriert sein.

In einer Ausführung der Erfindung ist in den Auffangbehälter ein feinporiges Filter, vorzugsweise ein Membranmodul, eingetaucht. Die Unterbrechung der Filtration während der Regeneration erfolgt mit Hilfe eines Absperrventils in der Ablaufleitung.

In einer vorteilhaften Ausführung wird das Wasser mit einer Pumpe durch die Membran gesaugt.

Um die Wassermenge im Reaktor konstant zu halten können Niveausensoren im Auffangbehälter eingesetzt werden. Im Auslauf ist ein Absperrventil eingebaut, mit dem die Filtration unterbrochen werden kann. Ein zusätzliches Drosselventil kann zur Begrenzung des Durchflusses in die Ablaufleitung eingebaut werden. Dieses kann über eine elektronische Steuerungseinrichtung in Abhängigkeit der Signale von den Niveausensoren eingeregelt werden.

In einer Ausführung endet die Zuleitung für den künstlich erzeugten Luftstrom unterhalb des Membranmoduls, so dass Luftblasen über die Membranflächen aufsteigen und dabei Turbulenz erzeugen.

Soll der Starkluftstrom zur Regenerierung auch zur Strömungs- oder Turbulenzerzeugung über der Membran genutzt werden, wird der Austritt der Zuleitung für den Starkluftstrom unter das Niveau des Wasserspiegels im Auffangbehälter geführt. Dabei kann der Austritt auch als Düse ausgeformt sein, um eine Strömung im Wasser zu erzeugen.

In einer weiteren vorteilhaften Ausführung wird die Ansaugöffnung der Kreislaufleitung so unter dem Membranmodul angebracht, dass eine Strömung durch das Modul von oben nach unten erzeugt wird, die festes Material gleichgerichtet mit der Schwerkraft nach unten saugt.

In einer weiteren Ausführung des Reaktors wird ein Cross-Flow-Filter, vorzugsweise ein Membranmodul, nicht im Auffangbehälter, sondern in der Kreislaufleitung angeordnet. Dabei wird das Wasser aus dem Auffangbehälter über ein Cross-Flow-Membranmodul gepumpt. Das Retentat wird zur Wasserverteilungseinrichtung geführt, das Filtrat in den Auslauf. Das Absperrventil im Auslauf dient der Unterbrechung der Filtration während der Regenerierung. Zur Regelung der auslaufenden Wassermenge können Niveausensoren im Auffangbehälter angebracht werden und ein zusätzliches automatisch angesteuertes Drosselventil im Auslauf zur Drosselung des Durchflusses.

Nachfolgend wird die Erfindung an zwei Ausführungsbeispielen näher erläutert. Es zeigen:
- Fig. 1: Reaktor mit Membranmodul im Reaktor
- Fig. 2: Reaktor mit Cross-Flow-Filter in der Kreislaufführung

### Ausführungsbeispiel 1

In einem Unternehmen für die Verarbeitung von Kaffee fallen Produktionsabwässer an, welche so weit aufbereitet werden sollen, dass sie wieder verwendet werden können. Die gereinigten Wässer sollen genutzt werden, um die ständigen Verluste durch Verdunsten und Abschlämmen in einem Kühlwasserkreislauf zu ersetzen.

Um das Verkeimungspotenzial innerhalb des Kühlsystems zu minimieren, besteht die Aufgabe, die biologisch abbaubare organische Fracht (BSB - Konzentration 700 - 750 mg/1) weitgehend zu eliminieren. Die Abwassermenge beträgt 220 m³ pro Tag bzw. 9.2 m³ pro Stunde.

Wasser welches in einem Kühlkreislauf verwendet wird, muss zuvor mit einer Ionenaustauscheranlage behandelt werden. Um eine optimale Austauschleistung bei dieser Anlage zu gewährleisten, ist es notwendig, zusätzlich zur organischen Fracht Mikroorganismen und feinste Suspendierte Stoffe zu entfernen.

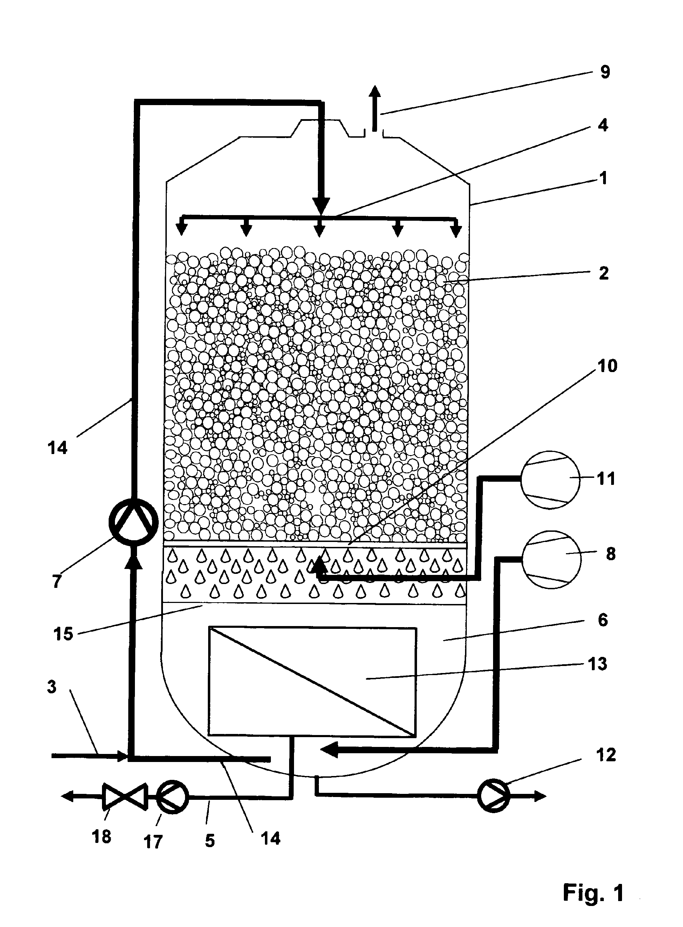

Die Abwasserbehandlung erfolgt, wie in der Figur 1 dargestellt, in einem zylinderförmigen Reaktor 1 aus Polyethylen mit einem Durchmesser von 3 m und einer Höhe von 8 m. Polyethylen kann verwendet werden, weil nur der Auffangbehälter 6 mit Wasser gefüllt ist, und bietet gegenüber Stahl große Vorteile in Bezug auf Investitionskosten, Verarbeitung und Wartungsaufwand. Als Aufwuchsträgermaterial für die Biomasse wird eine Trägermaterialschüttung 2 aus kugelförmigen Schaumpolystyren mit einer spezifischen Dichte von 0,02 g/cm³ und einer Korngröße im Bereich zwischen 5 und 10 mm sowie einer porösen Oberfläche verwendet. Die Trägermaterialschüttung 2 liegt auf einem Siebboden 10 oberhalb des Auffangbehälters 6.

Das Rohwasser wird über den Zulauf 3 in die Saugleitung der als Kreislaufpumpe ausgebildeten Pumpe 7 zugegeben und zusammen mit dem im Kreislauf geführten Wasser über die Kreislaufleitung 14 zum Kopf des Reaktors 1 geführt und oberhalb der Trägermaterialschüttung über eine Wasserverteileinrichtung 4 in Form mehrerer Prallplatten gleichmäßig verteilt.

Das Wasser im Reaktor 1, also auch im Auffangbehälter 6, hat eine sehr niedrige Biomassekonzentration von deutlich kleiner als 0,1 g/l (Trockensubstanz). In dem Auffangbehälter 6 ist ein Plattenmembranmodul 13 so eingesetzt, dass die Membranen vollständig unter den Wasserspiegel 15 eingetaucht sind. Der Wasserspiegel im Auffangbehälter 6 wird konstant gehalten, indem die Leistung der Pumpe 17 im Auslauf des Membranmoduls mit Hilfe eines Frequenzumformers mit PID-Regelung über das Signal eines Niveausensors im Auffangbehälter 6 geregelt wird. Während des Regeneriervorganges wird die Pumpe 17 abschaltet und das Absperrventil 18 geschlossen. Dadurch läuft die gleiche Menge gereinigtes Wasser aus dem Reaktor 1, welche als Rohwasser zuläuft.

Das Wasservolumen im Auffangbehälter 6 dient als Vorlage für eine Kreislaufpumpe 7. Die aus Rohwasserzulauf und mehrfacher Kreislaufführung resultierende Geschwindigkeit innerhalb des Reaktionsraums beträgt 10 m/h (10 Kubikmeter Wasser pro Quadratmeter Filterquerschnittsfläche).

Im Gegenstrom zum abwärts rieselnden Abwasser wird mit einem Ventilator kontinuierlich ein Luftstrom von 200 m³/h Umgebungsluft in die Zuführung 8 zugegeben. Diese Zuführung 8 endet in einer Verteilungseinrichtung für Luft unterhalb des Membranmoduls 13. Die Luft steigt in Form von Blasen durch das Membranmodul 13 an den Membranoberflächen entlang nach oben. Anschließend passiert die Luft das Aufwuchsträgermaterial und tritt über eine Auslassöffnung 9 für Luft am Kopf des Reaktors 1 aus.

Die Biomasse wächst in Form eines dichten Biofilms auf der Oberfläche und in den Zwischenräumen des Aufwuchsträgermaterials und besteht aus einer Vielzahl unterschiedlicher Bakterien und anderer Mikroorganismen in Verbindung mit stabilisierenden extrazellulären Verbindungen. Mit steigender Biofilmdicke wächst der freie Raum zwischen den einzelnen Trägermaterialteilchen mit Biomasse sowie abfiltrierten feinen Feststoffen zu, und die unteren Zellschichten des Biofilms werden zunehmend schlechter mit Nährstoffen und Sauerstoff versorgt.
Um einen Abfall der Raumabbauleistung des Bioreaktors durch die Behinderung des freien Durchgangs des abwärts rieselnden Abwassers und der nach oben strömenden Luft zu vermeiden, erfolgt alle 36 Stunden eine automatische Regenerierung der Trägermaterialschüttung 2. Dabei wird nach Abschalten des Zulaufes 3 für Rohwasser und der Filtration mittels des Absperrventiles 18 das Trägermaterial 8 mal hintereinander durch einen mit einem Gebläse in der Zuführung 11 erzeugten Starkluftstrom mit einer Geschwindigkeit von 1.200 m³ x h und einem Druck von 200 mbar von unten nach oben durchströmt, so dass etwa 20% der insgesamt im Aufwuchsträgermaterial vorhandenen Biomasse abgerieben werden. Die Zugabe von zusätzlichem Spülwasser ist nicht notwendig.

Durch die Zugabe des kontinuierlichen Luftstromes unterhalb des Membranmoduls 13 sowie die Zugabe von Starkluftstößen während der in regelmäßigen Abständen stattfindenden Regenerierung wird ein Abscheren des Belags an der Oberfläche der Membran und eine dementsprechend verlängerte Laufzeit der Membran gewährleistet.

Nach Abschalten des Kreislaufstroms fließt das Abwasser mit der abgeriebenen Biomasse aus der Trägermaterialschüttung in den Auffangbehälter 6 am Boden des Reaktors 1 und wird von dort mit einer Regeneratpumpe über den Ablauf 12 in einen Sedimentationsbehälter zur Auftrennung in eine absetzende und in eine aufschwimmende Phase sowie in Klarwasser gepumpt. Um eine erhöhte organische Fracht nach der Regenerierung zu vermeiden, wird der Auffangbehälter 6 vor Wiederaufnahme des Normalbetriebs nicht mit Rohwasser sondern mit gereinigtem Abwasser aus einer nachgeschalteten Grube angefüllt.
Nach der Regenerierung übernehmen bis dahin weniger aktive Zellen aus dem unteren Bereich des Biofilms die Funktion der abgeriebenen oberen Zellschichten, so dass es nicht zu einem Leistungseinbruch kommt.

Durch die Verwendung dieses Verfahrens kann ein gereinigtes Wasser mit einem BSB₅ von < 10 mg/l, das frei von suspendierten Stoffen ist, erzeugt werden, das weiter als Brauchwasser, z.B. als Kühlwasser, verwendet werden kann.

Gegenüber dem Einsatz eines reinen Filtrationsverfahrens oder herkömmlichen Biomembranverfahren ergeben sich erheblich verlängerte Standzeiten der Membranen.

### Ausführungsbeispiel 2

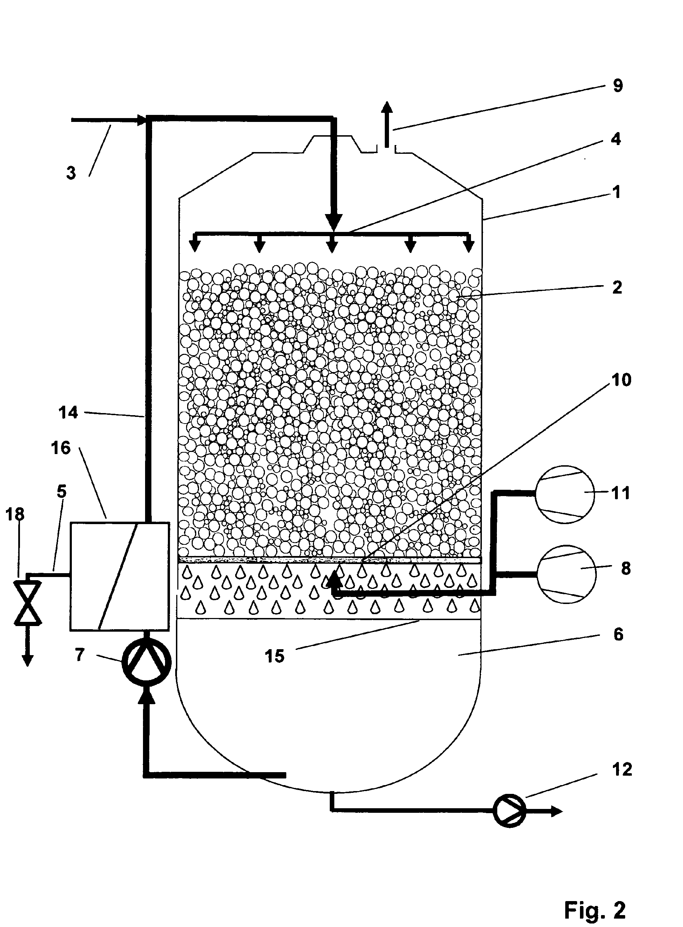

Ein weiteres Ausführungsbeispiel folgt dem in Figur 2 dargestellten Prinzip. In einem Reaktor 1 von 3 m Durchmesser und 10 m Höhe befindet sich eine Trägermaterialschüttung 2 wie schon in Beispiel 1 beschrieben. Der Auffangbehälter 6 darunter dient als Vorlage für die Pumpe 7 der Kreislaufleitung 14. Die Zuführung für Rohwasser 3 mündet am oberen Ende des Reaktors in die Kreislaufleitung 14. Dadurch wird sichergestellt, dass das Rohwasser zuerst einmal die bewachsene Trägermaterialschüttung passiert, bevor es durch das Membranmodul fließt. Die Pumpe 7 steht neben dem Reaktor 1 am Boden, ihr Auslass führt in ein als Membranmodul ausgebildeten Cross-Flow-Filter 16, das in Bodennähe installiert ist. Das Retentat des Membranmoduls wird über die Kreislaufleitung 14 zur Wasserverteileinrichtung 4 am Kopf des Reaktors geleitet und über der Trägermaterialschüttung 2 verteilt. Durch die Höhe des Reaktors 1 liegt über der Membran bei freiem Auslauf ein Differenzdruck von ca. 10 m Wassersäule bzw. 1 bar, der zur Filtration genutzt wird.

Zur Regelung des Wasserspiegels im Auffangbehälter 6 wird das Absperrventil 18 im Auslauf 5 des Membranmoduls 16 durch zwei Pegelschalter im Auffangbehälter 6 geschaltet. Durch diese diskontinuierliche Regelung lässt sich der Vorteil der Cross-Flow-Filtration auch im Regelbetrieb noch verstärken, da sich in den Phasen mit geschlossenem Absperrventil 18 Beläge leichter von den Membranoberflächen wieder lösen.

Die Zuführungen für den künstlich erzeugten Luftstrom 8 und für den Starkluftstrom 11 werden in einer Leitung in den Bereich unter der Trägermaterialschüttung 2 oberhalb des Wasserspiegels 15 geführt. Die Flüsse für den Kreislaufstrom und für die Luft entsprechen denen aus Beispiel 1.

Nach Abschaltung des Zulaufes 3 für Rohwasser und Schließen des Absperrventils 18 wird die Regenerierung des Trägermaterials mit Starkluftstößen entsprechend Beispiel 1 durchgeführt, das Regenerat über den Ablauf 12 abgezogen und der Auffangbehälter 6 wieder mit gereinigtem Wasser aufgefüllt.

### Bezugszeichenaufstellung

- 1: Reaktor
- 2: Trägermaterialschüttung
- 3: Zuführung (für Rohwasser)
- 4: Wasserverteilungseinrichtung
- 5: Ablauf
- 6: Auffangbehälter
- 7: Pumpe
- 8: Zuführung (für künstlich erzeugten Luftstrom)
- 9: Auslassöffnung für Luft
- 10: Siebboden
- 11: Zuführung (für Starkluftstrom)
- 12: Ablauf (für Regenerat)
- 13: Membranmodul
- 14: Kreislaufleitung
- 15: Wasserspiegel
- 16: Cross-Flow-Filter
- 17: Pumpe
- 18: Absperrventil

## Patentansprüche

1. Verfahren zur Behandlung von Wasser mit folgenden Verfahrensschritten:
- das zu behandelnde Wasser wird im oberen Teil eines nach oben offenen, nahezu drucklosen Reaktionsraums verteilt und durchrieselt eine nicht unter Wasser liegende Schüttung aus einem kleinkörnigen Aufwuchsträgermaterial für Mikroorganismen, das eine Dichte < 0,1 g/cm³ und eine Korngröße < 15 mm besitzt, von oben nach unten,
- gleichzeitig wird die Trägermaterialschüttung in Gegenrichtung zum abwärts rieselnden Wasser mit einem künstlich erzeugten Luftstrom von unten nach oben durchströmt,
- mindestens ein Teilstrom des durch die Trägermaterialschüttung gerieselten Wassers wird anschließend durch einen feinporigen Filter geleitet,
- in bestimmten Abständen findet eine Regenerierung statt, bei welcher die Trägermaterialschüttung in Gegenrichtung zum rieselnden Wasserstrom mit einem künstlich erzeugten Starkluftstrom von unten nach oben derart durchströmt und vermengt wird, dass ein Teil der an den einzelnen Trägerteilchen anhaftenden Biomasse sowie der gegebenenfalls aus dem Wasser abfiltrierten feinen Feststoffe abgerieben werden,
- und bei welcher anschließend Starkluftstrom und Wasserstrom unterbrochen werden und das anschließend aus der Trägermaterialschüttung abfließende Regenerat aus Wasser und abgeriebener Biomasse aufgefangen und aus dem System entfernt wird,
- wobei während der Regenerierung die Filtration durch den feinporigen Filter unterbrochen wird.

2. Verfahren nach Anspruch 1, **dadurch gekennzeichnet, dass** das nach der Passage des Trägermaterials aufgefangene Wasser mindestens teilweise im Kreislauf erneut von oben nach unten über die Trägermaterialschüttung gegeben wird.

3. Verfahren nach einem der Ansprüche 1 oder 2, **dadurch gekennzeichnet, dass** während der Regenerierung der Rohwasserzulauf abgeschaltet wird.

4. Verfahren nach einem der Ansprüche 1 bis 3, **dadurch gekennzeichnet, dass** nach der Regenerierung und dem anschließenden Abzug des Regenerats das Wasservolumen am Boden des Reaktionsraums wieder aufgefüllt wird und dazu Wasser, welches während der vorhergehenden Wasserbehandlung gesammelt wurde, verwendet wird.

5. Verfahren nach einem der Ansprüche 1 bis 4, **dadurch gekennzeichnet, dass** die aus dem Wasserzulauf und der zusätzlichen Kreislaufführung resultierende Geschwindigkeit des von oben nach unten rieselnden Wassers im Bereich zwischen 3 und 15 m³/m² x h liegt.

6. Verfahren nach einem der Ansprüche 1 bis 5, **dadurch gekennzeichnet, dass** der künstlich erzeugte Luftstrom mit einer Geschwindigkeit im Bereich zwischen 20 und 100 m³/m² x h durch die Trägermaterialschüttung gedrückt wird und der Starkluftstrom während der Regenerierung 150 - 1000 m³/m² x h mit einem Druck 20 -200 mbar pro Meter Höhe der Trägermaterialschüttung beträgt.

7. Verfahren nach einem der Ansprüche 1 bis 6, **dadurch gekennzeichnet, dass** der Starkluftstrom während der Regenerierung in einem Regime aus mehreren kurzzeitigen Stößen erfolgt.

8. Verfahren nach einem der Ansprüche 1 bis 7, **dadurch gekennzeichnet, dass** die Trägermaterialschüttung aus kugelförmigen Schaumpolystyren besteht.

9. Verfahren nach einem der Ansprüche 1 bis 8, wobei der feinporige Filter durch ein Membranmodul gebildet wird, wobei das Membranmodul in einem Auffangbehälter unterhalb der Trägermaterialschüttung in das Wasser eingetaucht ist und eine Strömung des Wassers im Auffangbehälter erzeugt wird, die über die Membranoberflächen fließt.

10. Verfahren nach Anspruche 9, **dadurch gekennzeichnet, dass** der künstlich erzeugte Luftstrom in den Wasserkörper unterhalb der Membran zugegeben wird und die entstehenden Luftblasen das Membranmodul vertikal durchströmen.

11. Verfahren nach einem der Ansprüche 9 oder 10, **dadurch gekennzeichnet, dass** der Starkluftstrom in den Wasserkörper zugegeben wird und eine turbulente Strömung durch das Membranmodul erzeugt wird.

12. Verfahren nach einem der Ansprüche 1 bis 11, wobei durch eine saugende Pumpe Wasser durch das feinporige Filter gesaugt wird.

13. Verfahren nach einem der Ansprüche 2 bis 8, wobei das Wasser nach dem Durchrieseln der Trägermaterialschüttung durch eine Pumpe unter Druck über ein feinporiges Filter im Cross-Flow Betrieb geleitet wird, wobei nur ein Teilstrom filtriert wird und das Retentat den Kreislaufstrom bildet.

14. Reaktor zur Durchführung eines Verfahrens nach einem der Ansprüche 1 bis 13 mit einer Schüttung aus feinkörnigem Trägermaterial (2), das eine Dichte < 0,1 g/cm³ und eine Korngröße < 15 mm besitzt, unter der ein Auffangbehälter (6) angeordnet ist, mit einer Zuführung für einen künstlich erzeugten Luftstrom (8) und einer Zuführung für einen Starkluftstrom (11), die beide unterhalb der Schüttung enden, einer Auslassöffnung für Luft (9) am oberen Ende, einer Zuführung (3) für Rohwasser, einer Kreislaufleitung (14) mit einer Pumpe (7), wobei die Kreislaufleitung vom Auffangbehälter (6) zu einer Wasserverteilungseinrichtung (4) führt, die das Wasser über die Schüttung verteilt, mit einem Ablauf für gereinigtes Wasser und mit einem Ablauf für Regenerat (12), **dadurch gekennzeichnet, dass** im Auffangbehälter (6) ein feinporiges Filter (13) eingetaucht ist, aus dem das gereinigte Wasser über den Ablauf (5) entnehmbar ist.

15. Reaktor nach Anspruch 14, **dadurch gekennzeichnet, dass** das feinporige Filter (13) als Membranmodul ausgeführt ist.

16. Reaktor nach Anspruch 14 oder 15, **dadurch gekennzeichnet, dass** das Filtrat über eine Pumpe (17) aus dem feinporigen Filter (13) abgezogen wird.

17. Reaktor nach einem der Ansprüche 14 bis 16, **dadurch gekennzeichnet, dass** der Austritt der Zuführung (8) für den künstlich erzeugten Luftstrom im Auffangbehälter (6) unterhalb des eingetauchten feinporiger Filters (13) angeordnet ist.

18. Reaktor nach einem der Ansprüche 14 bis 17, **dadurch gekennzeichnet, dass** der Austritt der Zuführung (11) für den Starkluftstrom unterhalb des Wasserspiegels (15) im Auffangbehälter (6) liegt.

19. Reaktor nach einem der Ansprüche 14 bis 18, **dadurch gekennzeichnet, dass** die Saugöffnung der Kreislaufleitung (14) unterhalb des feinporigen Filters (13) liegt.

20. Reaktor zur Durchführung eines Verfahrens nach einem der Ansprüche 1 bis 13 mit einer Schüttung aus feinkörnigem Trägermaterial (2), das eine Dichte < 0,1 g/cm³ und eine Korngröße < 15 mm besitzt, unter der ein Auffangbehälter (6) angeordnet ist, einer Zuführung für einen künstlich erzeugten Luftstrom (8) und einer Zuführung für einen Starkluftstrom (11), die beide unterhalb der Schüttung enden, einer Auslassöffnung für Luft (9) am oberen Ende, einer Zuführung (3) für Rohwasser, einer Kreislaufleitung (14) mit einer Pumpe (7), wobei die Kreislaufleitung vom Auffangbehälter (6) zu einer Wasserverteilungseinrichtung (4) führt, die das Wasser über die Schüttung verteilt, und einem Ablauf für gereinigtes Wasser und einem Ablauf (12) für Regenerat, **dadurch gekennzeichnet, dass** ein Cross-Flow-Filter (13) mit dem Ablauf (5) für gereinigtes Wasser in der Kreislaufleitung (14) nach der Pumpe (7) angeordnet ist.

## Claims

1. Method for treatment of water having the following method steps:
- the water that is to be treated is distributed in the upper part of an upwardly open, virtually unpressurized reaction space and trickles from top to bottom through a bed that is not situated below water and is made of a small-particle growth support material for microorganisms and which has a density < 0.1 g/cm³ and a particle size < 15 mm,
- at the same time an artificially generated air stream passes from bottom to top through the support material bed in counterflow to the downwardly trickling water,
- at least one substream of the water that has trickled through the support material bed is then passed through a fine-pore filter,
- at certain intervals, a regeneration takes place, in which an artificially generated strong air stream passes from bottom to top through the support material bed in counterflow to the trickling water stream and mixes it, in such a manner that some of the biomass adhering to the individual support particles and also any fine solids filtered off from the water are abraded,
- and in which then strong air stream and water stream are interrupted and the regenerated material of water and abraded biomass then draining off from the support material bed is collected and removed from the system,
- wherein, during the regeneration, the filtration through the fine-pore filter is interrupted.

2. Method according to Claim 1, **characterized in that** the water that is collected after passage through the support material is at least in part recirculated from top to bottom through the support material bed.

3. Method according to either of Claims 1 or 2, **characterized in that**, during the regeneration, the raw water inflow is cut off.

4. Method according to any one of Claims 1 to 3, **characterized in that**, after the regeneration and the subsequent take-off of the regenerated material, the water volume at the base of the reaction space is filled up again and for this purpose water which was collected during the preceding water treatment is used.

5. Method according to any one of Claims 1 to 4, **characterized in that** the velocity of the water trickling from top to bottom resulting from the water inflow and the additional circulation is in the range between 3 and 15 m³/m² x h.

6. Method according to any one of Claims 1 to 5, **characterized in that** the artificially generated air stream is forced through the support material bed at a velocity of a range between 20 and 100 m³/m² x h, and the strong air stream during the regeneration is 150 - 1000 m³/m² x h with a pressure 20 - 200 mbar per metre of height of the support material bed.

7. Method according to any one of Claims 1 to 6, **characterized in that** the strong air stream, during the regeneration, proceeds in a regime of a plurality of brief shocks.

8. Method according to any one of Claims 1 to 7, **characterized in that** the support material bed comprises bead-shaped foamed polystyrene.

9. Method according to any one of Claims 1 to 8, wherein the fine-pore filter is formed by a membrane module, wherein the membrane module is immersed in the water in a collection vessel beneath the support material bed and a streaming of the water in the collection vessel is generated which flows over the membrane surfaces.

10. Method according to Claim 9, **characterized in that** the artificially generated air stream is added to the water body below the membrane and the resultant air bubbles flow vertically through the membrane module.

11. Method according to either of Claims 9 or 10, **characterized in that** the strong air stream is added to the water body and a turbulent streaming is generated through the membrane module.

12. Method according to any one of Claims 1 to 11, wherein water is drawn through the fine-pore filter by a suction pump.

13. Method according to any one of Claims 2 to 8, wherein water, after it has trickled through the support material bed, is passed by a pump under pressure through a fine-pore filter in cross-flow operation, wherein only a substream is filtered and the retentate forms the circulation stream.

14. Reactor for carrying out a method according to any one of Claims 1 to 13 having a bed of fine-particle support material (2) which has a density < 0.1 g/cm³ and a particle size < 15 mm, beneath which is arranged a collection vessel (6), having a feed for an artificially generated air stream (8) and a feed for a strong air stream (11), both of which end below the bed, an outlet opening for air (9) at the upper end, a feed (3) for raw water, a circulation conduit (14) having a pump (7), wherein the circulation conduit leads from the collection vessel (6) to a water distribution appliance (4) which distributes the water over the bed, having an outflow for purified water and having an outflow for regenerated material (12), **characterized in that** a fine-pore filter (13) is immersed in the collection vessel (6) from which the purified water can be withdrawn via the outflow (5).

15. Reactor according to Claim 14, **characterized in that** the fine-pore filter (13) is constructed as a membrane module.

16. Reactor according to Claim 14 or 15, **characterized in that** the filtrate is taken off from the fine-pore filter (13) by a pump (17).

17. Reactor according to any one of Claims 14 to 16, **characterized in that** the exit of the feed (8) for the artificially generated air stream in the collection vessel (6) is arranged beneath the immersed fine-pore filter (13).

18. Reactor according to any one of Claims 14 to 17, **characterized in that** the exit of the feed (11) for the strong air stream is situated beneath the water surface (15) in the collection vessel (6).

19. Reactor according to any one of Claims 14 to 18, **characterized in that** the suction opening of the circulation conduit (14) is situated beneath the fine-pore filter (13).

20. Reactor for carrying out a method according to any one of Claims 1 to 13 having a bed of fine-particulate support material (2) which has a density < 0.1 g/cm³ and a particle size < 15 mm, beneath which is arranged a collection vessel (6), having a feed for an artificially generated air stream (8) and a feed for a strong air stream (11), both of which end below the bed, an outlet opening for air (9) at the upper end, a feed (3) for raw water, a circulation conduit (14) having a pump (7), wherein the circulation conduit leads from the collection vessel (6) to a water distribution appliance (4) which distributes the water over the bed, and an outflow for purified water and an outflow (12) for regenerated material, **characterized in that** a cross-flow filter (13) is arranged with the outflow (5) for purified water in the circulation conduit (14) downstream of the pump (7).

## Revendications

1. Procédé pour le traitement de l'eau, comprenant les étapes suivantes:
- l'eau à traiter est répartie dans la partie supérieure d'une chambre de réaction pratiquement sans pression, ouverte vers le haut, et ruisselle de haut en bas à travers une charge non située sous eau constituée d'une matière à grain fin de support de prolifération pour des microorganismes, qui possède une densité < 0,1 g/cm³ et une taille de grain < 15 mm,
- simultanément, la charge de matière de support est parcourue de bas en haut à contre-courant par rapport à l'eau ruisselant vers le bas par un flux d'air produit artificiellement,
- au moins un courant partiel de l'eau ruisselant à travers la charge de matière de support est ensuite conduit à travers un filtre finement poreux,
- à intervalles déterminés, il se produit une régénération, au cours de laquelle la charge de matière de support est parcourue de bas en haut à contre-courant par rapport au co urant d' eau ruisselant et mélangée avec un fort flux d'air produit artificiellement de telle manière qu'une partie de la biomasse accrochée aux particules de support individuelles ainsi que des matières fines solides filtrées hors de l'eau soient emportées,
- et au cours de laquelle le fort flux d'air et le courant d'eau sont ensuite interrompus et le produit de régénération composé d' eau et de biomasse entraînée qui s'écoule ensuite hors de la charge de matière de support est recueilli et évacué hors du système,
- dans lequel la filtration par le filtre finement poreux est interrompue pendant la régénération.

2. Procédé selon la revendication 1, **caractérisé en ce que** l'eau recueillie après le passage à travers la matière de support est au moins en partie déversée dans le circuit de nouveau de haut en bas sur la charge de matière de support.

3. Procédé selon l'une des revendications 1 ou 2, **caractérisé en ce que** l'apport d'eau brute est interrompu pendant la régénération.

4. Procédé selon l'une quelconque des revendications 1 à 3, **caractérisé en ce que**, après la régénération et le soutirage consécutif du produit de régénération, le volume d'eau au fond de la chambre de réaction est de nouveau rempli et on utilise à cet effet de l'eau, qui a été collectée pendant le traitement d'eau précédent.

5. Procédé selon l'une quelconque des revendications 1 à 4, **caractérisé en ce que** la vitesse de l'eau ruisselant de ha ut en bas, résultant de l'arrivée d'eau et du guidage de circuit supplémentaire, se situe dans la plage comprise entre 3 et 15 m³/m² x h.

6. Procédé selon l'une quelconque des revendications 1 à 5, **caractérisé en ce que** le flux d'air produit artificiellement est chassé à travers la charge de matière de support avec une vitesse se situant dans la plage de 20 à 100 m³/m² x h et le fort flux d'air pendant la régénération s'élève à 150 - 1000 m³/m² x h avec une pression de 20 - 200 mbar par mètre de hauteur de la charge de matière de support.

7. Procédé selon l'une quelconque des revendications 1 à 6, **caractérisé en ce que** le fort flux d'air pendant la régénération est produit selon un régime composé de plusieurs chocs brefs.

8. Procédé selon l'une quelconque des revendications 1 à 7, **caractérisé en ce que** la charge de matière de support se compose de polystyrène expansé de forme sphérique.

9. Procédé selon l'une quelconque des revendications 1 à 8, dans lequel le filtre finement poreux est formé par un module de membrane, dans lequel le module de membrane est plongé dans l'eau dans un récipient de collecte en dessous de la charge de matière de support et on produit un écoulement de l'eau dans le récipient de collecte, qui s'écoule sur les surfaces de membrane.

10. Procédé selon la revendication 9, **caractérisé en ce que** l'on introduit le flux d'air produit artificiellement dans la masse d'eau en dessous de la membrane et les bulles d'air formées traversent verticalement le module de membrane.

11. Procédé selon une des revendications 9 ou 10, **caractérisé en ce que** l'on introduit le fort flux d'air dans la masse d' eau et on produit un écoulement turbulent à travers le module de membrane.

12. Procédé selon l'une quelconque des revendications 1 à 11, dans lequel de l'eau est aspirée à travers le filtre finement poreux au moyen d'une pompe aspirante.

13. Procédé selon l'une quelconque des revendications 2 à 8, dans lequel l'eau est conduite, après le ruissellement à travers la charge de matière de support, par une pompe sous pression via un filtre finement poreux en fonctionnement à flux transversal, dans lequel seul un courant partiel est filtré et le produit retenu forme le courant du circuit.

14. Réacteur pour la mise en oeuvre d' un procédé selon l'une quelconque des revendications 1 à 13 avec une charge de matière de support à grain fin (2), qui possède une densité < 0,1 g/cm³ et une taille de grain < 15 mm, en dessous de laquelle est disposé un récipient de collecte (6), avec une arrivée pour un flux d'air produit artificiellement (8) et avec une arrivée pour un fort flux d'air (11), qui se terminent toutes les deux en dessous de la charge, avec une ouverture de sortie pour l'air (9) à l'extrémité s upérie ure, avec une arrivée (3) po ur l'eau brute, avec une conduite de circuit (14) avec une pompe (7), dans lequel la conduite de circuit mène du récipient de collecte (6) à un dispositif de répartition d'eau (4), qui répartit l'eau sur la charge, avec une évacuation po ur l'eau ép urée et avec une évacuation po ur le produit de régénération (12), **caractérisé en ce qu'**un filtre finement poreux (13), à partir duquel l'eau épurée peut être prélevée via l'évacuation (5), est plongé dans le récipient de collecte (6).

15. Réacteur selon la revendication 14, **caractérisé en ce que** le filtre finement poreux (13) est réalisé sous la forme d' un module de membrane.

16. Réacteur selon la revendication 14 ou 15, **caractérisé en ce que** le filtrat est aspiré hors du filtre finement poreux (13) au moyen d' une pompe (17).

17. Réacteur selon l'une quelconque des revendications 14 à 16, **caractérisé en ce que** la sortie de l'arrivée (8) pour le flux d'air produit artificiellement est disposée dans le récipient de collecte (6) en dessous du filtre finement poreux immergé (13).

18. Réacteur selon l'une quelconque des revendications 14 à 17, **caractérisé en ce que** la sortie de l'arrivée (11) pour le fort flux d'air est située en dessous du niveau d'eau (15) dans le récipient de collecte (6).

19. Réacteur selon l'une quelconque des revendications 14 à 18, **caractérisé en ce que** l'ouverture d'aspiration de la conduite de circuit (14) est située en dessous du filtre finement poreux (13).

20. Réacteur pour la mise en oeuvre d' un procédé selon l'une quelconque des revendications 1 à 13 avec une charge de matière de support à grain fin (2), qui possède une densité < 0,1 g/cm³ et une taille de grain < 15 mm, en dessous de laquelle est disposé un récipient de collecte (6), avec une arrivée pour un flux d'air produit artificiellement (8) et avec une arrivée pour un fort flux d'air (11), qui se terminent toutes les deux en dessous de la charge, avec une ouverture de sortie pour l'air (9) à l'extrémité supérieure, avec une arrivée (3) pour l'eau brute, avec une conduite de circuit (14) avec une pompe (7), dans lequel la conduite de circuit mène du récipient de collecte (6) à un dispositif de répartition d'eau (4), qui répartit l'eau sur la charge, avec une évacuation pour l'eau épurée et avec une évacuation (12) pour le produit de régénération, **caractérisé en ce qu'**un filtre à flux transversal (13) avec l'évacuation (5) po ur l'eau épurée est disposé après la pompe (7) dans la conduite de circuit (14).
